# EUROPEAN PATENT SPECIFICATION

(11) **EP 0 520 614 B1**
(45) Date of publication and mention of the grant of the patent: **06.03.1996**
(21) Application number: 92304465.5
(22) Date of filing: 18.05.1992
(51) Int. Cl.: F16D 65/04

(54) **One-piece transmission band**
Bremsband aus einem Stück
Bande de frein en une pièce

(30) Priority: 28.06.1991 US 723429
(43) Date of publication of application: 30.12.1992
(73) Proprietor: BORG-WARNER AUTOMOTIVE TRANSMISSION AND ENGINE COMPONENTS CORPORATION, Sterling Heights, Michigan 48311-8022 (US)
(72) Inventor: Puchalla, Christopher P., Lombard, Illinois 60148 (US); Grzesiak, Anthony J., Sauk Village, Illinois 60411 (US); Slager, Douglas J., Wheaton, Illinois 60187 (US)
(74) Representative: Allden, Thomas Stanley

(56) References cited:
- EP-A- 0 451 937
- EP-A- 0 464 995
- DE-B- 1 253 965
- FR-A- 2 367 946
- GB-A- 1 192 978
- US-A- 3 893 225

## Description

The present invention relates to a band member for use as a circumferential friction brake about a rotating member and, particularly but not exclusively, to a transmission band intended for use with an automatic transmission assembly and which is disposed to control movement of rotating transmission members.

Transmission bands are used to act as a brake or clutch to stop a rotating drum member of a transmission. The interior circumference of a transmission band is usually lined with a friction material to assist in achieving the smooth cessation of drum rotation. The ends of a transmission band generally have brackets or lugs known as apply and reaction members which are used to anchor the band member and engage apply pin members located within the transmission. The reaction member is usually anchored and the apply pin engages the apply member to push the apply member toward the reaction member, thereby decreasing the circumference of the band and causing the band to frictionally engage the rotating members or drums within the transmission to brake those members to a stop.

Commonly, prior art transmission bands have been designed to provide endurance under the stressful, repetitive conditions found in the operation of a transmission. Most often these heavy, thick, bands have a thickness or gauge of around .080 inches (0.20cm), allowing the band to enjoy a long life and yet provide some flexibility during application of the band to the rotating transmission drums. However, with the advent of higher fuel costs and automotive manufacturing demands for fuel efficiency, recent research has centered around producing transmission bands of lighter weight materials and thinner cross sections. Development of these lighter weight bands having thinner cross section designs has been plagued by increased problems in the overall quality of the transmission bands and their ability to perform the required repetitive and stressful functions.

A typical single wrap transmission band is formed as a strip of sheet metal having a friction lining adhered about the interior circumference with separate apply and reaction members attached to the ends of the strap members. The apply and reaction members are commonly manufactured as formed brackets which are secured to the strap by an appropriate form of attachment such as a tab lance, extrusion, spot weld, or structural adhesive. The application of these heavy forged apply and reaction members to the lighter, thinner straps is, however, counter-productive to meeting the demands of the automotive manufacturers for lighter weight components. The prior art forged apply and reaction brackets not only have a relatively thick cross section and substantial added weight, they interfere with the potential for enhanced operation characteristics of the transmission band. Transmission bands manufactured from a thinner gauge sheet metal have enhanced operational characteristics when compared to the prior art thicker gauge bands especially in the ability of the band to conform to the rotating drums of the transmission and wear evenly about the band. Bands manufactured with the thick forged apply and reaction brackets, however, do not have the desired flexibility toward the ends of the band where the apply and reaction members are attached and the band, therefore, does not engage, with uniformity, around the rotating transmission pieces. Thus, there is an enhanced possibility of uneven wear of the transmission bands.

Problems have also been encountered with known transmission bands that have been designed to incorporate lighter-weight apply and reaction brackets. A noticeably reduced ability in the load carrying capability of the transmission band commonly results from a premature failure of the band due to stress and fatigue of the lighter-weight apply and reaction members.

FR-A-2367946 generally discloses a band member for use as a circumferential friction brake about a rotating member, consisting of a strap member of a determined cross-sectional thickness having opposed end portions, the strap member extending in a generally circular configuration to form an inner strap circumference and an outer strap circumference, a friction lining secured to the inner strap circumference, an apply member formed from one of the end portions, and a reaction member formed from the remaining end portion.

In accordance with the present invention as claimed, the aforementioned generally disclosed band member is characterized in that at least one of the end portions is created by folding a single-thickness portion of the strap member flat back into direct engagement with the outer strap circumference to form a double thickness of the strap member, the entire extent of that end portion being inclusive of such directly engaged double thickness of strap material including the fold portion.

A band in accordance with the present invention may be constructed as a lightweight one-piece transmission band having load carrying capabilities at least as good if not better than those of the heavier common prior art bands and which will engage rotating transmission members with greater conformity than current bands.

In order that the invention may be well understood there will now be described some embodiments thereof, given by way of example, reference being made to the accompanying drawings, in which:
Fig. 1 is a side view of a transmission band of the present invention having a formed apply member and volcano-type reaction member;
Fig. 2 is a detailed view of the reaction member of the band of Fig. 1 taken along line 2-2 of Fig. 1;
Fig. 3 Is a detailed view of the apply member of the band of Fig. 1 taken along line 3-3 of Fig. 1;
Fig. 4 is a side view of an alternative embodiment of the transmission band of the present invention also showing the apply pin and reaction pin in ghost detail;
Fig. 5 is a front view of the transmission band of Fig. 4;
Fig. 6 is a side view of a second alternative embodiment of the transmission band of the present invention;
Fig. 7 is a detailed view of the reaction member of the band of Fig. 6 taken along line 7-7 of Fig. 6;
Fig. 8 is a detailed view of the apply member of the band of Fig. 6 taken along line 8-8 of Fig. 6;
Fig. 9 is a top view of an alternative embodiment of the apply member of the bands of Figs. 1, 4, or 6;
Fig. 10 is a side view of the apply member of Fig. 9; and
Fig. 11 is a sectional view of the apply member of Fig. 9 taken along line 11-11 of Fig. 9.

Band assemblies 10 constructed in accordance with the present invention are generally shown. A strap member 12 is formed, usually from an elongated strip of sheet metal, and is arranged in a circular configuration so as to conform with the circular transmission drum (not shown). The sheet metal material from which the strap is formed preferably has a gauge of .040 inches (0.10cm) to .050 inches (0.13cm), approximately one-half the accepted thickness or gauge of standard prior art transmission bands. This dramatic reduction in gauge produces a lightweight band having greatly enhanced friction performance and coastdown characteristics. The strap member 12 includes a friction lining 14 suitably adhered to the inner circumference of the strap member 12. The end portions 16 of the strap member 12 are formed by any suitable process, to be discussed in detail, into the appropriate and desired apply member 18 and reaction member 20.

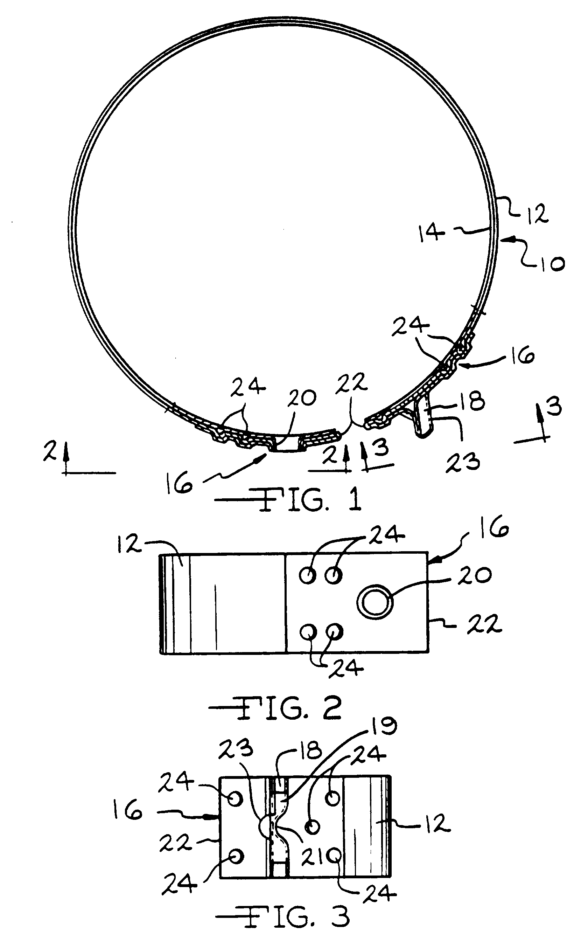

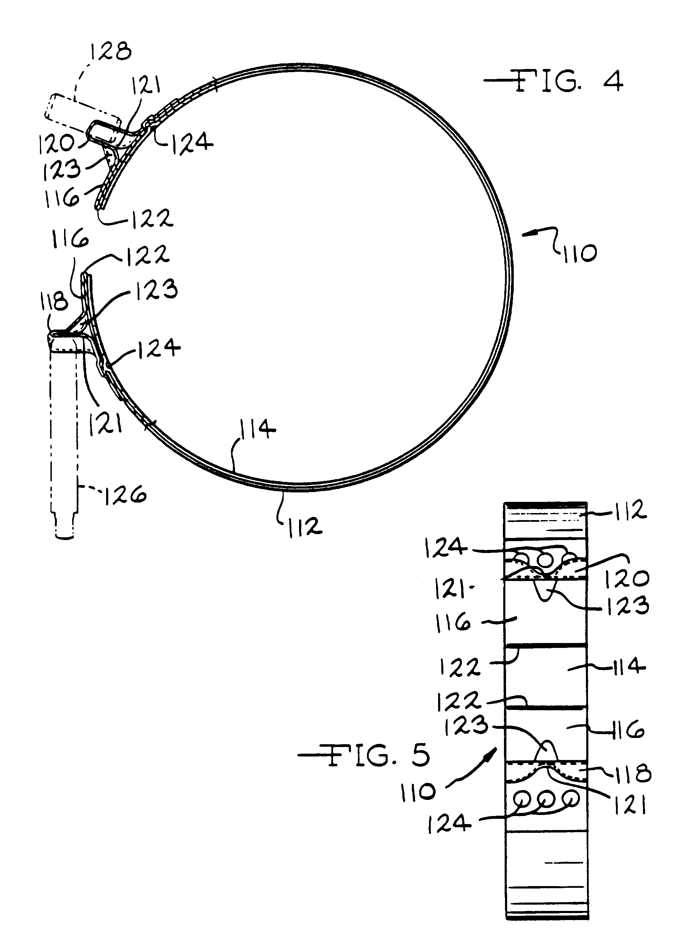

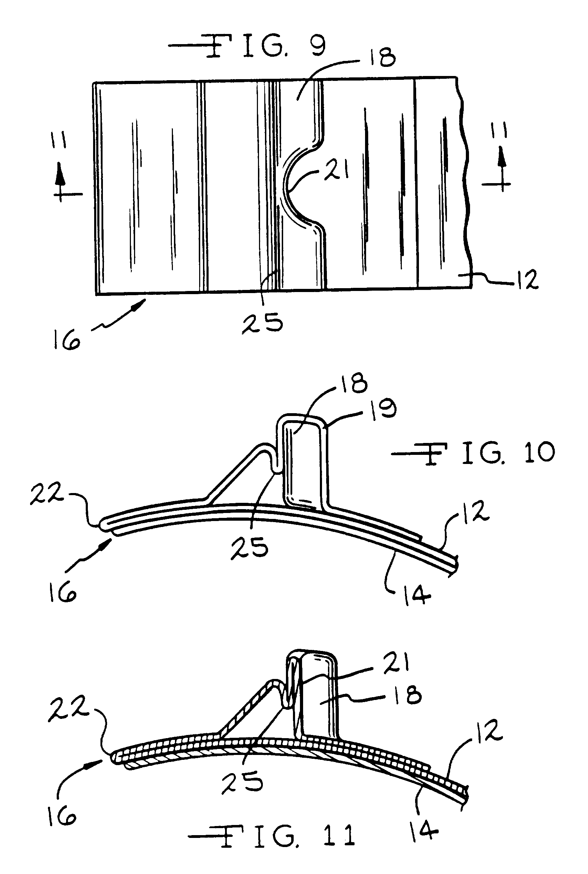

Referring now to Figs. 1-3, a preferred embodiment of the band member 10 is shown. The band member includes a strap member 12 having a friction member 14 adhered to the inner circumference of the strap member 12. The apply member 18, shown in detail in Fig. 3, is formed on the inner circumference of an end portion 16. The apply member 18 is formed with a folded ridge 19 having a pocket 21 for receiving the apply pin. A reinforcing gusset or rib 23 is provided on the opposed or outward side of the pocket 21 to reinforce the contact point for the apply pin. Referring now to Figs. 9-11, an alternative embodiment of the formed apply bracket 18 is shown. The bracket 18 is generally formed in the same manner as the bracket 18 of Figs. 1-3. However, a reinforcing fold 25 is formed in the rear or outward side of the pocket 21 and replaces the gusset 23. The reinforcing fold 25 acts to widen the acceptable zone of apply pin placement. After the apply member 18 is formed, the end portion 16 is folded 22 flat 180° back over the outer circumference of the strap member 12 and adhered 24 thereto by any suitable fastening method. The remaining end portion 16 also is folded 22 flat 180° back over the outer circumference of the strap member 12 and adhered 24 thereto. As shown in Fig. 2, the reaction member 20 is formed by puncturing the combined strap member 12 and folded over end portion 16. The reaction member 20 of Figs. 1-3 is a volcano-type member which is described in detail in co-pending U.S. application Serial No. 07/546,161, filed June 28, 1990, the subject matter of which is incorporated herein in its entirety.

Referring now to Figs. 4 and 5, an alternative embodiment of the band member 110 includes a strap member 112 having a friction lining 114 suitably adhered to its inner circumference. The apply member 118 and the reaction member 120 are formed on the end portions 116 on the inner circumference of the strap member 112. The apply member 118 and reaction members 120 of this embodiment are formed in the same fashion as the apply member 18 of Figs. 1 and 3. Again, the member 118, 120 may include a reinforcing gusset 123 or, alternatively, a reinforcing fold as previously discussed with regard to Figs. 1, 3 and 6. After forming the apply member 118 and reaction member 120, the end portions 116 of the strap member are folded 122 flat 180° back over the outer circumference of the strap member 112 so that the apply member 118 and reaction member 120 are located in the outer circumference of the strap member 112 proximate the fold area 122. The folded over end portions 116 are then attached to the strap member by any suitable means of adhesion 124 such as extrusion, tap lance, spot welding or the application of a structural adhesive. Also shown in Fig. 4, in ghost, is the proximate locations for the push pin 126 as it is engaged with the pocket 121 of the apply member 118 and an anchor pin 128 as it is engaged with the pocket 121 of the reaction member 120.

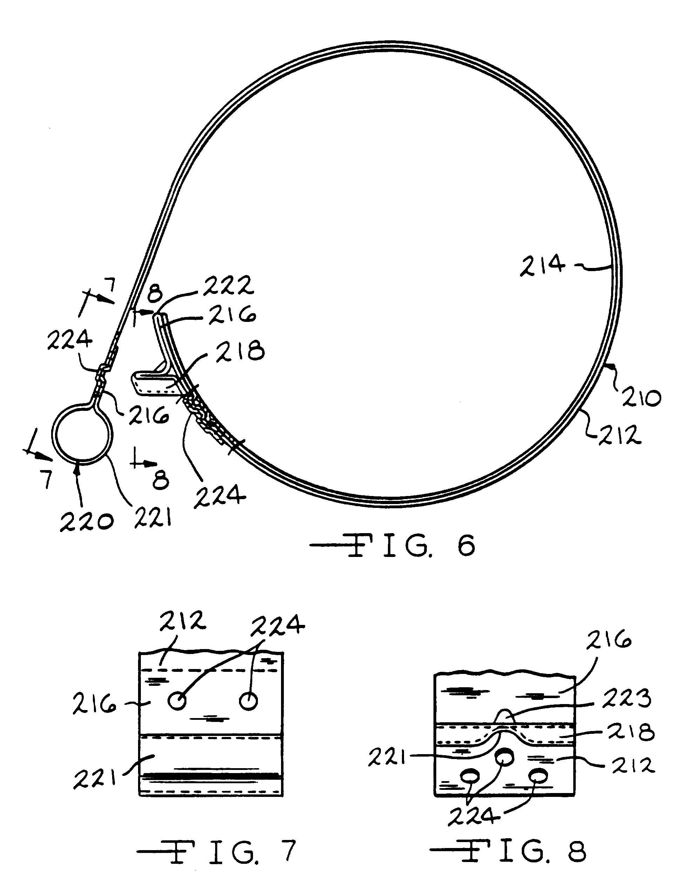

Referring now to Figs. 6-8, yet another alternative of the present invention is shown. The band member 210 includes a strap member 212 having a friction lining 214 suitably adhered to its inner circumference. The apply member 218 is formed on one end 216 of the strap member 212 and folded 222 flat 180° back over the outer circumference of the strap member 212 and adhered 224 thereto as previously discussed with regard to Figs. 1, 3, 4 and 5. The reaction member 220 is formed as a hoop 221 which is applicable in use where the anticipated loads on the band are not very large or where slot openings in the transmission are specifically designed to accept the hoop to minimize stresses. The end portion 216 of the reaction member 220 is flattened against the strap 212 and again adhered 224 thereto as previously discussed.

## Claims

1. A band member for use as a circumferential friction brake about a rotating member, consisting of a strap member (12; 112; 212) of a determined cross-sectional thickness having opposed end portions (16; 116; 216), the strap member (12; 112; 212) extending in a generally circular configuration to form an inner strap circumference and an outer strap circumference, a friction lining (14; 114; 214) secured to the inner strap circumference, an apply member (18; 118; 218) formed from one (16; 116; 216) of the end portions, and a reaction member (20; 120; 220) formed from the remaining end portion (16; 116; 216); characterized in that at least one (16; 116; 216) of the end portions is created by folding a single-thickness portion of the strap member (12; 112; 212) flat (22; 122; 222) back into direct engagement with the outer strap circumference to form a double thickness of the strap member (12; 112; 212), the entire extent of that end portion (16; 116; 216) being inclusive of such directly engaged double thickness of strap material including the fold portion (22; 122; 222).

2. A band member as claimed in claim 1, wherein said one end portion (16; 116) from which the apply member (18; 118) is formed also defines a first surface for directly engaging with the outer circumference of the strap member (12; 112), said remaining end portion (16; 116) from which the reaction member (20; 120) is formed also defines a second surface for directly engaging with the outer circumference of the strap member (12; 112), and both said opposed end portions (16; 116) are folded flat (22; 122) back into engagement with the outer strap circumference to form a double directly engaged thickness of the strap material at the flat fold (22; 122) and where the first and second engaging surfaces engage the outer strap circumference.

3. A band member as claimed in claim 1, wherein said at least one end portion (16; 116) defines the apply member (18; 118) and an engagement surface for directly engaging the outer circumference of the strap member (12; 112), the apply member (18; 118) and the engagement surface being folded flat (22; 122) back into engagement with the outer strap circumference to double said determined cross-sectional thickness where the engagement surface directly engages the outer strap circumference, the entire extent of the double thickness, including the fold portion (22; 122), being formed from such engagement of the engagement surface with the outer strap circumference, the remaining end portion (16; 116) being configured to be double said determined cross-sectional thickness by folding a single thickness portion of such strap member (12; 112) flat back into direct engagement with the outer circumference of the strap member (12; 112), the entire extent of such directly engaged double thickness including the fold portion (22; 122) and having the reaction member (18; 118) formed thereon.

4. A band member as claimed in any of the preceding claims, wherein the apply member (18; 118; 218) includes a ridge (19) formed into the strap member (12; 112; 212), the ridge (19) being upraised from the inner strap circumference.

5. A band member as claimed in claim 4, wherein the ridge (19) of the apply member (18; 118; 218) includes a pocket (21; 121) formed therein for receiving and guiding an apply pin (126).

6. A band member as claimed in claim 4 or claim 5, wherein the ridge (19) of the apply member (18; 118; 218) includes a reinforcing gusset (23; 123) integrally formed therewith and located opposite the area of contact by an apply pin (126).

7. A band member as claimed in claim 4 or claim 5, wherein the ridge (19) of the apply member (18; 118; 218) includes a reinforcing fold (25) of the strap member (12; 112; 212) located in opposition to the area of contact of an apply pin (126).

8. A band member as claimed in any of the preceding claims, wherein the reaction member (120) includes a ridge formed from the strap member (112), the ridge being upraised from the inner strap circumference.

9. A band member as claimed in claim 8, wherein the ridge of the reaction member (120) includes a pocket (121) formed therein for receiving and guiding an anchor pin (128).

10. A band member as claimed in claim 8 or claim 9, wherein the ridge of the reaction member (120) includes a reinforcing gusset (123) integrally formed therewith and located opposite the area of contact of an anchor pin (128).

11. A band member as claimed in claim 8 or claim 9, wherein the ridge of the reaction member (120) includes a reinforcing fold of the strap member (112) located in opposition to the area of contact of an apply pin (126).

12. A band member as claimed in any of claims 1 to 7, wherein the reaction member (20) is formed from said double thickness of the strap member (12) by piercing said double thickness of strap material to form an aperture therethrough.

13. A band member as claimed in claim 1 and any of claims 4 to 7 except when appendant to claim 2 or claim 3, wherein the reaction member (220) is formed by folding the strap member (212) back over on to the inner strap circumference to form a hoop portion (221) and a flat portion adjacent the hoop portion (221) and positioned flat on the inner strap circumference and adhered thereto.

14. A band member as claimed in any of the preceding claims, wherein the strap member (12; 112; 212) is of a determined thickness of 0.10 cm (0.04 inches) to 0.13 cm (0.05 inches).

## Patentansprüche

1. Bandelement zur Verwendung als Umfangsreibbremse um ein rotierendes Element, bestehend aus einem Streifenelement (12; 112; 212) einer vorgegebenen Querschnittsdicke mit gegenüberliegenden Endabschnitten (16; 116; 216), das sich in einer allgemein kreisförmigen Konfiguration erstreckt und einen inneren Streifenumfang sowie einen äußeren Streifenumfang bildet, einem Reibbelag (14; 114; 214), der am inneren Streifenumfang befestigt ist, einem Beaufschlagungselement (18; 118; 218), das aus einem (16; 116; 216) der Endabschnitte gebildet ist, und einem Reaktionselement (20; 120; 220), das aus dem verbleibenden Endabschnitt (16; 116; 216) gebildet ist, dadurch gekennzeichnet, daß mindestens einer (16; 116; 216) der Endabschnitte durch Flachfalten (22; 122; 222) eines Abschnittes einfacher Dicke des Streifenelementes (12; 112; 212) zurück in direkten Eingriff mit dem äußeren Streifenumfang hergestellt ist, um eine doppelte Dicke des Streifenelementes (12; 112; 212) auszubilden, wobei das Gesamtausmaß dieses Endabschnittes (16; 116; 216) diese in direktem Eingriff stehende doppelte Dicke des Streifenmateriales einschließlich des Faltenabschnittes (22, 122; 222) einschließt.

2. Bandelement nach Anspruch 1, bei dem der eine Endabschnitt (16; 116), aus dem das Beaufschlagungselement (18; 118) geformt ist, auch eine erste Fläche zum direkten Eingriff mit dem Außenumfang des Streifenelementes (12; 112) bildet, der verbleibende Endabschnitt (16; 116), aus dem das Reaktionselement (20; 120) geformt ist, ebenfalls eine zweite Fläche für einen direkten Eingriff mit dem Außenumfang des Streifenelementes (12; 112) bildet und beide gegenüberliegende Endabschnitte (16; 116) zurück in Eingriff mit dem äußeren Streifenumfang flach gefaltet (22; 122) sind, um eine doppelte in direktem Eingriff stehende Dicke des Streifenmateriales an der flachen Falte (22; 122) zu bilden, wobei die erste und zweite Eingriffsfläche mit dem äußeren Streifenumfang in Eingriff stehen.

3. Bandelement nach Anspruch 1, bei dem der mindestens eine Endabschnitt (16; 116) das Beaufschlagungselement (18; 118) und eine Eingriffsfläche zum direkten Eingriff mit dem Außenumfang des Streifenelementes (12; 112) bildet, das Beaufschlagungselement (18; 118) und die Eingriffsfläche zurück in Eingriff mit dem äußeren Streifenumfang flach gefaltet (22; 122) sind, um die vorgegebene Querschnittsdicke zu verdoppeln, wobei die Eingriffsfläche in direktem Eingriff mit dem äußeren Streifenumfang steht, das gesamte Ausmaß der doppelten Dicke einschließlich des Faltenabschnittes (22; 122) aus einem derartigen Eingriff der Eingriffsfläche mit dem äußeren Streifenumfang geformt ist, der verbleibende Endabschnitt (16; 116) so ausgebildet ist, daß er der doppelten vorgegebenen Querschnittsdicke entspricht, indem ein Abschnitt einfacher Dicke dieses Streifenelementes (12; 112) zurück in direkten Eingriff mit dem Außenumfang des Streifenelementes (12; 112) flach gefaltet ist, und das gesamte Ausmaß dieser in direktem Eingriff stehenden doppelten Dicke den Faltenabschnitt (22; 122) umfaßt und das daran ausgebildete Reaktionselement (18; 118) aufweist.

4. Bandelement nach einem der vorangehenden Ansprüche, bei dem das Beaufschlagungselement (18; 118; 218) einen Rücken (19) aufweist, der in das Streifenelement (12, 112; 212) geformt ist und vom inneren Streifenumfang vorsteht.

5. Bandelement nach Anspruch 4, bei dem der Rücken (19) des Beaufschlagungselementes (18; 118; 218) eine darin ausgebildete Tasche (21; 121) zur Aufnahme und zur Führung eines Beaufschlagungsstiftes (126) aufweist.

6. Bandelement nach Anspruch 4 oder Anspruch 5, bei dem der Rücken (19) des Beaufschlagungselementes (18; 118; 218) einen Verstärkungseinsatz (23; 123) aufweist, der einstückig damit ausgebildet und gegenüber dem Kontaktbereich durch einen Beaufschlagungsstift (126) angeordnet ist.

7. Bandelement nach Anspruch 4 oder Anspruch 5, bei dem der Rücken (19) des Beaufschlagungselementes (18; 118; 218) eine Verstärkungsfalte (25) des Streifenelementes (12; 112; 212) aufweist, die gegenüber dem Kontaktbereich eines Beaufschlagungsstiftes (126) angeordnet ist.

8. Bandelement nach einem der vorangehenden Ansprüche, bei dem das Reaktionselement (120) einen Rücken aufweist, der vom Streifenelement (112) ausgebildet ist und vom inneren Streifenumfang vorsteht.

9. Bandelement nach Anspruch 8, bei dem der Rücken des Reaktionselementes (120) eine darin ausgebildete Tasche (121) zur Aufnahme und zur Führung eines Verankerungsstiftes (128) besitzt.

10. Bandelement nach Anspruch 8 oder Anspruch 9, bei dem der Rücken des Reaktionselementes (120) einen Verstärkungseinsatz (123) aufweist, der einstückig damit ausgebildet und gegenüber dem Kontaktbereich eines Verankerungsstiftes (128) angeordnet ist.

11. Bandelement nach Anspruch 8 oder Anspruch 9, bei dem der Rücken des Reaktionselementes (120) eine Verstärkungsfalte des Streifenelementes (112) umfaßt, die gegenüber dem Kontaktbereich eines Beaufschlagungsstiftes (126) angeordnet ist.

12. Bandelement nach einem der Ansprüche 1 - 7, bei dem das Reaktionselement (20) aus der doppelten Dicke des Streifenelementes (12) geformt ist, indem die doppelte Dicke des Streifenmateriales zur Ausbildung einer Durchtrittsöffnung durchbohrt worden ist.

13. Bandelement nach Anspruch 1 und einem der Ansprüche 4 - 7 mit Ausnahme eines Rückbezuges auf Anspruch 2 oder Anspruch 3, bei dem das Reaktionselement (220) durch Falten des Streifenelementes (212) zurück auf den inneren Streifenumfang zur Ausbildung eines Reifenabschnittes (221) und eines flachen Abschnittes benachbart zum Reifenabschnitt (221) geformt ist und flach auf dem inneren Streifenumfang angeordnet sowie damit verklebt ist.

14. Bandelement nach einem der vorangehenden Ansprüche, bei dem das Streifenelement (12; 112; 212) eine vorgegebene Dicke von 0,10 cm (0,04 Zoll) bis 0,13 cm (0,05 Zoll) besitzt.

## Revendications

1. Elément en bande destiné à être utilisé comme frein à friction circonférenciel autour d'un élément tournant, composé d'un élément de ruban (12 ; 112 ; 212) d'une épaisseur en section transversale déterminée, comportant des parties d'extrémité opposées (16 ; 116 ; 216), l'élément de ruban (12 ; 112 ; 212) s'étendant en une configuration généralement circulaire afin de former une circonférence intérieure du ruban et une circonférence extérieure du ruban, une garniture de friction (14 ; 114 ; 214) fixée à la circonférence intérieure du ruban, un élément d'application (18 ; 118 ; 218) formé à partir d'une première (16 ; 116 ; 216) des parties d'extrémité, et un élément de réaction (20 ; 120 ; 220) formé à partir de la partie d'extrémité restante (16 ; 116 ; 216), caractérisé en ce qu'au moins l'une (16 ; 116 ; 216) des parties d'extrémité est réalisée en repliant une partie de simple épaisseur de l'élément de ruban (12 ; 112 ; 212) à plat (22 ; 122 ; 222) vers l'arrière en contact direct avec la circonférence extérieure du ruban afin de former une double épaisseur de l'élément de ruban (12 ; 112 ; 212), l'étendue entière de cette partie d'extrémité (16 ; 116 ; 216) comprenant cette double épaisseur en contact direct de matériau de ruban y compris la partie repliée (22 ; 122 ; 222).

2. Elément en bande selon la revendication 1, dans lequel ladite première partie d'extrémité (16 ; 116) à partir de laquelle est formé l'élément d'application (18 ; 118) définit également une première surface destinée à venir en contact direct avec la circonférence extérieure de l'élément de ruban (12 ; 112), ladite partie d'extrémité restante (16 ; 116) à partir de laquelle est formé l'élément de réaction (20 ; 120) définit également une seconde surface destinée à venir en contact direct avec la circonférence extérieure de l'élément de ruban (12 ; 112), et les deux dites parties d'extrémité opposées (16 ; 116) sont repliées à plat (22 ; 122) vers l'arrière en contact avec la circonférence extérieure du ruban afin de former une double épaisseur en contact direct du matériau de ruban au niveau du pli plat (22 ; 122) et où les première et seconde surfaces de contact sont en contact avec la circonférence extérieure du ruban.

3. Elément en bande selon la revendication 1, dans lequel ladite au moins une partie d'extrémité (16 ; 116) définit l'élément d'application (18 ; 118) et une surface d'engagement destinée à venir en contact direct avec la circonférence extérieure de l'élément de ruban (12 ; 112), l'élément d'application (18 ; 118) et la surface d'engagement étant repliées à plat (22 ; 122) en arrière en contact avec la circonférence extérieure du ruban afin de doubler ladite épaisseur déterminée en section transversale là où la surface d'engagement vient en contact direct avec la circonférence extérieure du ruban, l'étendue entière de la double épaisseur, y compris la partie de pli (22 ; 122), étant formée à partir tel contact de la surface d'engagement avec la circonférence extérieure du ruban, la partie d'extrémité restante (16 ; 116) étant configurée pour être le double de ladite épaisseur en section transversale déterminée en repliant une partie de simple épaisseur de cet élément de ruban (12 ; 112) à plat vers l'arrière en contact direct avec la circonférence extérieure de l'élément de ruban (12 ; 112), l'étendue entière de cette double épaisseur en contact direct comprenant la partie de pli (22 ; 122) et comportant l'élément de réaction (18 ; 118) formé sur celle-ci.

4. Elément en bande selon l'une quelconque des revendications précédentes, dans lequel l'élément d'application (18 ; 118 ; 218) comprend une crête (19) formée dans l'élément de ruban (12 ; 112 ; 212), la crête (19) étant surélevée à partir de la circonférence intérieure du ruban.

5. Elément en bande selon la revendication 4, dans lequel la crête (19) de l'élément d'application (18 ; 118 ; 218) comprend une poche (21 ; 121) formée dans celle-ci pour recevoir et guider une tige d'application (126).

6. Elément en bande selon la revendication 4 ou la revendication 5, dans lequel la crête (19) de l'élément d'application (18 ; 118 ; 218) comprend un gousset de renforcement (23 ; 123) formé de façon intégrale avec celle-ci et situé à l'opposé de la zone de contact avec une tige d'application (126).

7. Elément en bande selon la revendication 4 ou la revendication 5, dans lequel la crête (19) de l'élément d'application (18 ; 118 ; 218) comprend un pli de renforcement (25) de l'élément de ruban (12 ; 112 ; 212) situé à l'opposé de la zone de contact avec une tige d'application (126).

8. Elément en bande selon l'une quelconque des revendications précédentes, dans lequel l'élément de réaction (120) comprend une crête formée à partir de l'élément de ruban (112), la crête étant surélevée à partir de la circonférence intérieure du ruban.

9. Elément en bande selon la revendication 8, dans lequel la crête de l'élément de réaction (120) comprend une poche (121) formée dans celle-ci pour recevoir et guider une tige d'ancrage (128).

10. Elément en bande selon la revendication 8 ou la revendication 9, dans lequel la crête de l'élément de réaction (120) comprend un gousset de renforcement (123) formé de façon intégrale avec celle-ci et situé à l'opposé de la zone de contact avec une tige d'ancrage (128).

11. Elément en bande selon la revendication 8 ou la revendication 9, dans lequel la crête de l'élément de réaction (120) comprend un pli de renforcement de l'élément de ruban (112) situé à l'opposé de la zone de contact avec une tige d'application (126).

12. Elément en bande selon l'une quelconque des revendications 1 à 7, dans lequel l'élément de réaction (20) est formé à partir de ladite double épaisseur de l'élément de ruban (12) en transperçant ladite double épaisseur de matériau de ruban afin de former une ouverture au travers de celle-ci.

13. Elément en bande selon la revendication 1 ou l'une quelconque des revendications 4 à 7 sauf lorsqu'elles dépendent de la revendication 2 ou de la revendication 3, dans lequel l'élément de réaction (220) est formé en repliant l'élément de ruban (12) vers l'arrière sur la circonférence intérieure du ruban afin de former une partie de boucle (221) et une partie plate à proximité de la partie de boucle (221) et positionnée à plat sur la circonférence intérieure du ruban et collée à celle-ci.

14. Elément en bande selon l'une quelconque des revendications précédentes, dans lequel l'élément de ruban (12 ; 112 ; 212 ) est d'une épaisseur déterminée comprise entre 0,10 cm (0,04 pouce) et 0,13 cm (0,05 pouce).
